# EUROPÄISCHE PATENTSCHRIFT

(11) **EP 0 501 139 B1**
(45) Veröffentlichungstag und Bekanntmachung des Hinweises auf die Patenterteilung: **12.06.1996**
(21) Anmeldenummer: 92101053.4
(22) Anmeldetag: 23.01.1992
(51) Int. Cl.: C09C 1/00, C04B 14/36, C08K 9/02, C09D 7/12, C09C 1/28, C09C 3/06, C03C 8/18, C03C 17/10

(54) **Purpurpigmente, Verfahren zu deren Herstellung und deren Verwendung**
Purple pigments, their manufacture and their use
Pigments pourpres, procédé de préparation et utilisation

(30) Priorität: 01.03.1991 DE 4106520
(43) Veröffentlichungstag der Anmeldung: 02.09.1992
(73) Patentinhaber: CERDEC AKTIENGESELLSCHAFT KERAMISCHE FARBEN, D-60327 Frankfurt (DE)
(72) Erfinder: Dorbath, Bernd, Dr., W-8755 Alzenau (DE); Starz, Karl-Anton, Dr., W-6458 Rodenbach (DE); Völker, Werner, Dr., W-6368 Bad Vilbel (DE); Jerke, Wilan, W-6369 Niederdorfelden (DE); Dorer, Kai, W-6956 Heusenstamm (DE)

(56) Entgegenhaltungen:
- EP-A- 0 162 979
- PATENT ABSTRACTS OF JAPAN, Band 5, Nr. 35 (C-46), 05 März 1981
- WPIL, Woche 40, Derwent Publications Ltd., London (GB); AN 89-291098
- WPIL, Woche 20, Derwent Publications Ltd., London (GB); AN 91-146218
- WPIL, Woche 8, Derwent Publcations Ltd., London (GB); AN 81-12921d

## Beschreibung

Die Erfindung betrifft Purpurpigmente auf der Basis von Glasfritten mit einer kolloidales Gold enthaltenden Beschichtung, ein Verfahren zu deren Herstellung und deren Verwendung zur Pigmentierung von Glasuren, Emaillen, Dekorfarben, Glasfarben, Kunststoffen, Druckfarben und Lacken.

Purpurpigmente auf der Basis von keramischen Materialien und kolloidalem Gold sind auf unterschiedliche Weise zugänglich und finden schon lange Verwendung zur Erzeugung keramischer Dekore sowie zum Pigmentieren von Kunststoffen, Lacken und Dekorfarben.

Gebräuchliche Verfahren zur Herstellung von Purpurpigmenten mit feinverteiltem Glas als keramischem Bindemittel und kolloidalem Gold als farbbildender Komponente erfordern mehrere Prozeßstufen: (a) Ausfällen von gelförmigem Cassius schem Goldpurpur aus wäßrigen Goldsalzlösungen mittels Reduktionsmitteln, wie beispielsweise Zinn(II)-chlorid mit nachfolgendem Altern und Abtrennen, (b) Mischen des frisch hergestellten, noch feuchten Goldpurpurs mit feingemahlenem Glas und Mahlen des Gemischs, (c) Vorsintern des Gemischs bei etwa 600 - 800 ^{o}C, wobei die Goldpartikel zumindest teilweise von Glas umhüllt werden, (d) Feinmahlung des gesinterten Materials und, soweit erforderlich, Einstellung des geforderten Farbtons durch Zugabe von Silberverbindungen und/oder anderen Flußmitteln. Gravierende Nachteile dieses Verfahrens bestehen darin, daß das Abtrennen des gelförmigen Goldpurpurs von der wäßrigen Lösung der Stufe (a) recht aufwendig ist, der Farbton des fertigen Pigments in schwer reproduzierbarer Weise von der Alterung des Goldpurpurs beeinflußt wird - beispielsweise Braunfärbung im Falle eines Antrocknens - sowie zwei die Raum-Zeit-Ausbeute mindernde Mahlstufen und eine energieintensive Sinterstufe erforderlich sind. Unter dem Mikroskop ist zudem die Uneinheitlichkeit der so gewonnenen Pigmente erkennbar.

Es hat nicht an Versuchen gefehlt, das oben skizzierte Verfahren zu verbessern. Durch Ausfällen des Goldpurpurs in Gegenwart von Oxidhydrate bildenden Stoffen, wie Al- und Sn-Salzen, lassen sich leichter filtrierbare Copräzipitate aus kolloidalem Gold und den Oxidhydraten gewinnen, wobei gleichzeitig der Farbton der Copräzipitate besser reproduzierbar und alterungsbeständig ist. Die weiteren Prozeßstufen zur Herstellung entsprechen allerdings den vorgenannten Stufen (b), (c) und (d) - beispielhaft wird auf das RO-Patent 64442 B (Chemical Abstracts 98 (26): 22 07 40e) hingewiesen - so daß der gesamte Verfahrensaufwand weiterhin beträchtlich ist. Hinzu kommt, daß das Pigment uneinheitlich ist und die Gegenwart des Oxids die Brillanz des Pigments und/oder die Eigenschaften von solche Pigmente enthaltenden Glasuren, Emaillen, Glas- und Dekorfarben nachteilig beeinflußt werden können.

Die Ausfällung des Goldpurpurs kann gemäß DD-PS 143423 auch in Gegenwart von intertem Material durchgeführt werden. Anschließend wird der purpurfarbene feuchte Niederschlag mit einem Glasfluß und zwecks Farbtonsteuerung zusätzlich Silbercarbonat homogen vermischt und naß gemahlen, bei 650 - 680 °C gesintert und wieder gemahlen. Den verfahrensgemäß erhaltenen Purpurpigmenten haften die vorerwähnten Qualitätsnachteile an.

Purpurfarbene Perlglanzpigmente auf der Basis von mit Metalloxiden beschichteten plättchenförmigen Teilchen, wie insbesondere TiO₂ beschichtetem Glimmer, mit einer optisch halbdurchlässigen Schicht aus Gold - vgl. DE-PS 32 29 837, DE-OS 38 25 702 - oder einer Deckschicht aus Zinndioxid, in welche kolloidales Gold eingelagert ist - vgl. DE-OS 37 31 174 - haben Eingang in den Markt gefunden. Die goldhaltige Beschichtung befindet sich hier immer auf einer Metalloxidschicht, welche zunächst auf einen plättchenförmigen Träger, außer Glimmer wurde auch Glas offenbart, aufgebracht werden muß. In keinem Fall wurde ein teilchenförmiges Glas direkt auf seiner Oberfläche mit kolloidalem Gold beschichtet. Offensichtlich wurde die Anwesenheit einer Metalloxidschicht unter einer goldhaltigen Beschichtung als notwendig angesehen. Das Aufbringen einer Metalloxidschicht ist aber aufwendig, weil vor der Beschichtung mit Gold ein Kalzinierungsschritt erforderlich ist, um Oxidhydrate in Oxide zu überführen.

Die Metalloxide können zudem die Pigmentqualität und deren anwendungstechnische Eigenschaften ungünstig beeinflussen.

In der JP-A 55 160061 (Patent Abstracts of Japan Vol. 5, no. 35 (C-46).5.3.81) werden metallbeschichtete Füllstoffe offenbart. Der Füllstoff weist einen mittleren Teilchendurchmesser von etwa 50 bis 2000 µm auf und kann aus Glas bestehen; als Metalle werden Silber sowie Gold genannt. Die Beschichtung des Füllstoffs erfolgt in wäßriger Phase durch Ausfällung des Metalls mittels Fehling'scher Lösung oder Glucose.

In der JP-A 0121865 werden Purpurpigmente und sie enthaltende kosmetische Präparate offenbart. Als Trägermaterialien werden TiO₂, Talk, Glimmer, Ton und Polyethylenkugeln, jedoch keine Glasfritte, als Beschichtungsmaterial Gold genannt. Die Beschichtung des Trägermaterials erfolgt durch Reduktion von Chlorogoldsäure mit einem Reduktionsmittel, wie Zinn(II)chlorid.

Aufgabe der vorliegenden Erfindung ist es, neue Purpurpigmente auf der Basis von feinverteiltem Glas, wie insbesondere Glasfritten, mit einer kolloidales Gold enthaltenden Beschichtung aufzuzeigen, die sich durch eine hohe Brillanz und herausragende anwendungstechnische Eigenschaften bezüglich der Verträglichkeit mit den zu dekorierenden keramischen Substraten auszeichnen und deren Farbe einen stärkeren Rotton aufweist und deren Farbe in einfacher Weise bei ihrer Herstellung eingestellt werden kann. Eine weitere Aufgabe besteht darin, ein Verfahren zur Herstellung der neuen Purpurpigmente zu finden.

Gefunden wurden die gattungsgemäßen Purpurpigmente, welche dadurch gekennzeichnet sind, daß die Beschichtung im wesentlichen kolloidales Gold in einer Menge von 0,05 bis 5 Gew.-%, bezogen auf das Pigment, und Silber und, sofern erwünscht, ein oder mehrere farbtonmodifizierende Metalle aus der Reihe Cu, Co, Ni, Sn, Ru, Rh, Pd, Os, Ir, Pt in einer Gesamtmenge einschließlich der Menge an Silber unterhalb derjenigen des Goldes enthält und sich direkt auf der Oberfläche von Glasfritten, deren mittlerer Teilchendurchmesser (D₅₀-Wert) im Bereich von 0,5 bis 50 µm liegt, befindet.

Die Beschichtung kann außer den genannten Metallen aus dem Beschichtungsprozeß stammende zusätzliche Stoffe, wie beispielsweise Oxide, in geringem Umfang - unter 20 Gew.-%, bezogen auf den Gesamtgehalt an Metallen - enthalten. Die Farbintensität der Pigmente wird durch die Goldmenge bestimmt; meist sind 0,1 bis 2,0 Gew.-%, insbesondere 0,1 bis 1,0 Gew.-%, kolloidales Gold, jeweils bezogen auf das Pigment, ausreichend. Silber und die anderen farbtonmodifizierenden Elemente können gemeinsam mit dem Gold oder in einem separaten Schritt auf der Glasfritte abgeschieden worden sein. Die Metalle sind auf der Glasfritte im wesentlichen in einer dünnen Schicht, bestehend aus einer oder mehreren Atomlagen, in der Form abgeschieden, daß die Pigmentteilchen zumindest teilweise optisch durchlässig sind.

Bevorzugte Purpurpigmente weisen eine Beschichtung auf, welche ausschließlich aus kolloidalem Gold und Silber besteht. Der Farbton silberfreier Purpurpigmente ist violettstichig, derjenige silberhaltiger mit steigendem Silbergehalt mehr rotstichig. Der Silbergehalt dieser Pigmente beträgt im allgemeinen bis zu 50 Gew.-%, bevorzugt bis zu 25 Gew.-%, des Goldgehalts.

Als Trägermaterial für die Purpurpigmente dienen feingemahlene Glasfritten. Glasfritten lassen sich in chemisch unterschiedlicher Zusammensetzung durch Erschmelzen geeigneter Glasrohstoffe, Abschrecken der Glasschmelze in Wasser und Mahlen der dabei erhaltenen Granalien oder Schuppen gewinnen. Der mittlere Teilchendurchmesser, der sogenannte D₅₀-Wert, liegt bei Pigmenten im allgemeinen zwischen etwa 0.5 und 50 µm, bevorzugt werden aber Glasfritten mit einem D₅₀-Wert zwischen 1 und 10 µm verwendet. Der D₅₀-Wert läßt sich mittels bekannter Granulometeranalysen ermitteln.

Die Zusammensetzung der Fritten hat einen maßgeblichen Einfluß auf deren Erweichungsverhalten, Wärmeausdehnungskoeffizienten und spezifische Farbentwicklung, worunter in der keramischen Industrie die Wechselwirkung zwischen einem Farbkörper und einer Fritte während eines Brandes verstanden wird.

Durch die Auswahl der Glasfritte aus einem breitgefächerten, im Markt verfügbaren Angebot, ist es möglich, den erfindungsgemäßen Purpurpigmenten jeweils eine solche Glasfritte zugrundezulegen, deren Eigenschaften ganz oder zumindest teilweise denen entsprechen, welche im infragestehenden Dekorationsverfahren mitverwendete und auf den zu dekorierenden Träger abgestimmte Fritten aufweisen. Hiermit werden Störungen, wie Abplatzen, Sprünge und Trübungen, im keramischen Dekor vermieden.

Die erfindungsgemäßen Purpurpigmente sind durch ein einstufiges, in seltenen Fällen zweistufiges Beschichtungsverfahren erhältlich. Der bei vorbekannten Purpurpigmenten oftmals erforderliche Kalzinierungs- und/oder Sinterprozeß bei Temperaturen über etwa 600 °C und der sich daran anschließende Mahlprozeß entfallen im erfindungsgemäßen Verfahren. Letzteres ist dadurch gekennzeichnet, daß man auf der Oberfläche einer unbeschichteten Glasfritte, deren mittlerer Teilchendurchmesser (D₅₀ -Wert) im Bereich von 0,5 bis 50 µm liegt, kolloidales Gold in einer Menge von 0.05 bis 5.0 Gew.-%, bezogen auf das Pigment, und Silber und, sofern erwünscht, ein oder mehrere farbtonmodifizierende Metalle aus der Reihe Cu, Co, Ni, Sn, Ru, Rh, Pd, Os, Ir, Pt in einer Gesamtmenge unterhalb derjenigen des Goldes abscheidet, indem in einer die Glasfritte enthaltenden wäßrigen Suspension die abzuscheidenden Metalle aus wasserlöslichen Verbindungen des Goldes und Silbers, und, soweit vorhanden, der farbtonmodifizierenden Metalle in Gegenwart von Reduktionsmitteln gebildet werden, und das so erhaltene Pigment von der wäßrigen Phase getrennt und getrocknet wird.

Gold und Silber sowie weitere farbtonmodifizierende Metalle können gleichzeitig oder hintereinander abgeschieden werden. Es kann hierbei ein geeignetes Reduktionsmittel zur Abscheidung aller Metalle zur Anwendung gelangen, was im Falle von silbermodifizierten Purpurpigmenten bevorzugt wird, oder man verwendet ggf. zwei verschiedene Reduktionsmittel, eines für die Ausfällung des Goldes, ein anderes für die Ausfällung des Silbers und des/der anderen farbtonmodifizierenden Metalle.

Als Reduktionsmittel für die Abscheidung von kolloidalem Gold und farbtonmodifizierenden Metallen, einschließlich Silber auf im wesentlichen der Oberfläche der Fritte, können in wäßrigen Medien wirksame Reduktionsmittel Verwendung finden, beispielsweise Aldehyde, wie Formaldehyd und Acetaldehyd, Weinsäure, Ascorbinsäure, Reductone, reduzierende Zucker, wie Glucose, Glykole, Polyphenole, Sulfite, Dithionite, Hypophosphite, Hydrazin, Metallhydride, komplexe Hydride, Zinn(II)salze und Wasserstoff. Besonders geeignete Reduktionsmittel sind Formaldehyd, Tartrate und Glucose, womit sich Gold und Silber problemlos abscheiden lassen. Zur Durchführung der Beschichtung werden bevorzugt die Goldlösung und entsprechend die farbtonmodifizierende Metallsalzlösung zu der die Fritte und das Reduktionsmittel enthaltenden und auf den erforderlichen pH-Wert eingestellten wäßrigen Suspension bei 5 bis 100 °C unter Rühren zugegeben.

Im Prinzip kann aber auch das Reduktionsmittel zur Metallverbindung und Glasfritte enthaltenden Suspension zugegeben werden. Sofern erwünscht, kann der eigentlichen Beschichtung eine sogenannte Aktivierung der Oberfläche der Glasfritte vorgeschaltet werden, indem die Glasfritte zunächst mit einer wäßrigen SnCl₂-Lösung behandelt und anschließend nachgewaschen wird.

Wie bereits zuvor angedeutet, lassen sich die erfindungsgemäßen Purpurpigmente zur Pigmentierung von Glasuren, Emaillen, Kunststoffen, Glas- und Dekorfarben, Lacken und Druckfarben und damit auch zur Herstellung von Dekorfarben verwenden.

Es können auf den jeweiligen Anwendungszweck speziell abgestimmte Purpurpigmente herangezogen werden - für Glasfarben also Pigmente auf der Basis niedrig schmelzender Fritten, für Porzellanfarben und Schnellbrandfarben sowie Farben für Wandfließen solche auf der Basis höher schmelzender Fritten. Durch das an die Glasfritten der Glasuren und Emaillen angepaßte Pigment wird das Fließverhalten der Glasuren und Emaillen beim Einbrennen nicht verändert. Während vorbekannte goldhaltige Purpurpigmente, welche neben Glasteilchen auch Aluminiumoxidteilchen enthalten, bei Temperaturen um 1100 °C nicht ausreichend farbstabil sind, eignen sich die erfindungsgemäßen Purpurpigmente für den Hochtemperaturschnellbrand für Porzellan. Die vorerwähnten Pigmente des Standes der Technik führten zudem oft nur zu opaken und matten Dekoren, wohingegen die Verwendung der erfindungsgemäßen Purpurpigmente die Herstellung transparenter und damit brillanter Dekore erlaubt. Da im keramischen Sektor die Fritte der erfindungsgemäßen Pigmente im wesentlichen mit jenen der Glasuren und Emaillen in Übereinstimmung gebracht wird, kommt es zu keinen unerwarteten Farbtonveränderungen. Die Mitverwendung von farbtonmodifizierenden Metallen bei der Herstellung der Pigmente macht eine nachträgliche Farbtonmodifizierung durch Zugabe von z. B. Silbercarbonat zur Dekorfarbe überflüssig.

Es war nicht vorhersehbar, daß sich die Gold und Silber enthaltenden Purpurpigmente in der dargestellten Weise herstellen lassen, einen stärkeren Rotton aufweisen, völlig einheitlich sind und die aufgezeigten vorteilhaften anwendungstechnischen Eigenschaften aufweisen.

Die nachfolgenden Beispiele verdeutlichen die Erfindung.

### Vergleichsbeispiel

### Belegung einer Glasfritte mit 0,5 Gew.-% Gold

Die verwendete Glasfritte enthält als Hauptbestandteile PbO, SiO₂, Al₂O₃, SnO₂ und B₂O₃; Korngrößenverteilung: 90 % kleiner 8 µm. Zur Beschichtung werden 50 g der Glasfritte in einer Lösung von 350 ml Wasser und 25 g D-Glucose durch Rühren in Schwebe gehalten. Der pH-Wert dieser Reaktionsmischung wird mit Ammoniak von 5,5 auf 11 erhöht, dann bei etwa 25 °C eine klare Lösung von 0,5 g AuCl₄ × H₂O (= 0,25 g Au) in 50 ml Wasser auf einmal zugegeben. Nach dieser Zugabe wird die Reaktionsmischung ohne Temperaturzufuhr weiter gerührt. Nach circa 20 Minuten Reaktionszeit beobachtet man eine Farbänderung der Reaktionsmischung. Nach 120 Minuten ist die Reduktion vollständig. Beim Ausschalten der Rührung setzen sich die Partikel sofort ab. Über dem Bodensatz bildet sich ein klares Filtrat. Das purpurfarbene Pigment wird abgesaugt, mit Wasser und Äthanol gewaschen und bei 100 °C getrocknet.

### Beispiel 1

### Belegung einer Hochtemperaturschnellbrand(HTS)-Fritte mit 0,5 Gew.-% Gold und gleichzeitig mit 0,1 Gew.-% Silber

Die HTS-Fritte besteht aus SiO₂, PbO, B₂O₃, Al₂O₃ und CaO. Für die Korngrößenverteilung gilt 90 % kleiner 15 µm. 50 g HTS-Fritte werden zu einer Lösung von 50 g D-Glucose in 350 ml Wasser gegeben. Der pH-Wert dieser Lösung wird mit Ammoniak von 5,5 auf 11 erhöht. Die Reaktionsmischung wird so heftig gerührt, daß die Partikel in der Lösung in Schwebe gehalten werden. Dann werden nacheinander die Lösung von 0.5 g H(AuCl₄) × H₂O in 50 ml Wasser und die Lösung von 0.08 g AgNO₃ (= 0,05 % Ag) in 50 ml Wasser zugegeben. Diese Reaktionsmischung wird bei Raumtemperatur 2 Stunden gerührt. Danach werden das Pigment abfiltriert, gewaschen und bei 100 °C getrocknet.

### Belegung einer Glasfritte mit 0,5 Gew.-% Gold und 0,1 Gew.-% Silber

Bei der verwendeten Glasfritte handelt es sich um eine bleifreie Glasfritte mit den Hauptbestandteilen B₂O₃, SiO₂, Na₂O und Al₂O₃. Für die Korngröße gilt 90 % kleiner 5 µm. 50 g Glasfluß werden in einer Lösung von 50 g D-Glucose in 350 ml Wasser aufgeschlemmt. Der pH-Wert dieser Lösung wird mit Ammoniak von 6 auf 11 erhöht. Die Reaktionsmischung wird so heftig gerührt, daß sich die Glaspartikel nicht absetzen können. Die Temperatur der Reaktionsmischung sollte bei etwa 25 °C liegen. Zu dieser Reaktionsmischung gibt man eine Goldlösung aus 0.5 g H(AuCl₄) × H₂O und 50 ml Wasser und läßt solange reagieren, bis man eine Farbänderung der Reaktionsmischung beobachtet. Jetzt gibt man eine Lösung von 0,08 g AgNO₃ in 50 ml Wasser zu und läßt nochmals 2 Stunden bei Raumtemperatur reagieren. Anschließend wird das Pigment abgesaugt, gewaschen und getrocknet bei 100 °C.

## Patentansprüche

1. Purpurpigmente auf der Basis von Glasfritten mit einer kolloidales Gold enthaltenden Beschichtung,
dadurch gekennzeichnet,
daß die Beschichtung im wesentlichen kolloidales Gold in einer Menge von 0,05 bis 5 Gew.-%, bezogen auf das Pigment, und Silber und, sofern erwünscht, ein oder mehrere farbtonmodifizierende Metalle aus der Reihe Cu, Co, Ni, Sn, Ru, Rh, Pd, Os, Ir, Pt in einer Gesamtmenge einschließlich der Menge an Silber unterhalb derjenigen des Goldes enthält und sich direkt auf der Oberfläche von Glasfritten, deren mittlerer Teilchendurchmesser (D50-Wert) im Bereich von 0,5 bis 50 µm liegt, befindet.

2. Purpurpigmente nach Anspruch 1,
dadurch gekennzeichnet,
daß sie 0,1 bis 2,0 Gew.-% kolloidales Gold enthalten.

3. Purpurpigmente nach Anspruch 1 oder 2,
dadurch gekennzeichnet,
daß die Beschichtung aus kolloidalem Gold und Silber besteht, wobei die Menge an Silber bis zu 50 Gew.-% des Goldgehalts beträgt.

4. Purpurpigmente nach einem der Ansprüche 1 bis 3,
dadurch gekennzeichnet,
daß die Glasfritte einen D50-Wert im Bereich von 1 bis 10 µm aufweist.

5. Verfahren zur Herstellung von Purpurpigmenten auf der Basis von Glasfritten mit einer kolloidales Gold und Silber enthaltenden Beschichtung gemäß einem der Ansprüche 1 bis 4,
dadurch gekennzeichnet,
daß man auf der Oberfläche einer unbeschichteten Glasfritte, deren mittlerer Teilchendurchmesser (D50-Wert) im Bereich von 0,5 bis 50 µm liegt, kolloidales Gold in einer Menge von 0,05 bis 5,0 Gew.-%, bezogen auf das Pigment, und Silber und, sofern erwünscht, ein oder mehrere farbtonmodifizierende Metalle aus der Reihe Cu, Co, Ni, Sn, Ru, Rh, Pd, Os, Ir, Pt in einer Gesamtmenge einschließlich der Menge an Silber unterhalb derjenigen des Goldes abscheidet, indem in einer die Glasfritte enthaltenden wäßrigen Suspension die abzuscheidenden Metalle aus wasserlöslichen Verbindungen des Goldes und Silbers und, soweit vorhanden, der farbtonmodifizierenden Metalle in Gegenwart von Reduktionsmitteln gebildet werden, und das so erhaltene Pigment von der wäßrigen Phase getrennt und getrocknet wird.

6. Verfahren nach Anspruch 5,
dadurch gekennzeichnet,
daß man die Abscheidung von Gold und Silber unter Verwendung des gleichen Reduktionsmittels gleichzeitig oder hintereinander durchführt.

7. Verwendung der Purpurpigmente nach einem der Ansprüche 1 bis 4 zur Pigmentierung von Glasuren, Emaillen, Glasfarben, Dekorfarben, Kunststoffen, Druckfarben und Lacken.

## Claims

1. Purple pigments based on glass frits having a coating containing colloidal gold, characterized in that the coating essentially contains colloidal gold in a quantity of 0.05 to 5% by weight, based on the pigment, and silver and - if desired - one or more colour-modifying metals from the group consisting of Cu, Co, Ni, Sn, Ru, Rh, Pd, Os, Ir and Pt in a total quantity, including the quantity of silver, below that of the gold and is directly applied to the surface of glass frits of which the particle diameter (D₅₀ value) is in the range from 0.5 to 50 µm.

2. Purple pigments as claimed in claim 1, characterized in that they contain 0.1 to 2.0% by weight of colloidal gold.

3. Purple pigments as claimed in claim 1 or 2, characterized in that the coating consists of colloidal gold and silver, the quantity of silver being up to 50% by weight of the gold content.

4. Purple pigments as claimed in any of claims 1 to 3, characterized in that the glass frit has a D₅₀ value in the range from 1 to 10 µm.

5. A process for the production of purple pigments based on glass frits having a coating containing colloidal gold and silver according to any of claims 1 to 4, characterized in that colloidal gold in a quantity of 0.05 to 5.0% by weight, based on the pigment, and silver and - if desired - one or more colour-modifying metals from the group consisting of Cu, Co, Ni, Sn, Ru, Rh, Pd, Os, Ir and Pt in a total quantity, including the quantity of silver, below that of the gold are deposited on the surface of an uncoated glass frit, of which the average particle diameter (D₅₀ value) is in the range from 0.5 to 50 µm, by forming the metals to be deposited from water-soluble compounds of gold and silver and, where present, the colour-modifying metals in the presence of reducing agents in an aqueous suspension containing the glass frit, separating the pigment thus obtained from the aqueous phase and drying the pigment.

6. A process as claimed in claim 5, characterized in that gold and silver are deposited simultaneously or successively using the same reducing agent.

7. The use of the purple pigments claimed in any of claims 1 to 4 for pigmenting glazes, enamels, glass colours, decorative colours, plastics, printing inks and lacquers.

## Revendications

1. Pigments pourpres à base de frittes de verre avec un revêtement contenant de l'or colloïdal,
caractérisés en ce que le revêtement contient essentiellement de l'or colloïdal en une quantité de 0,05 à 5 % en poids, par rapport au pigment, et de l'argent et, si désiré, d'un ou de plusieurs métaux modifiant la tonalité de la série Cu, Co, Ni, Sn, Ru, Rh, Pd, Os, Tr, Pt en une quantité totale, y compris la quantité d'argent inférieure à celle de l'or et se trouve directement sur la surface de frittes de verre, dont le diamètre moyen de particule (valeur D₅₀) se situe dans la zone de 0,5 à 50 µm.

2. Pigments pourpres selon la revendication 1,
caractérisés en ce qu'ils contiennent 0,1 à 2,0 % en poids d'or colloïdal.

3. Pigments pourpres selon les revendications 1 ou 2,
caractérisés en ce que le revêtement se compose d'or colloïdal et d'argent, la quantité d'argent se montant à 50 % en poids de la teneur en or.

4. Pigments pourpres selon une des revendications 1 à 3,
caractérisés en ce que la fritte de verre comporte une valeur D₅₀ dans la zone de 1 à 10 µm.

5. Procédé de préparation de pigments pourpres à base de frittes de verre avec un revêtement contenant de l'or colloïdal et de l'argent selon une des revendications 1 à 4,
caractérisé en ce qu'on dépose sur la surface d'une fritte de verre non recouverte, dont le diamètre moyen de particules (valeur D₅₀) se situe dans la zone de 0,5 à 50 µm, de l'or colloïdal en une quantité de 0,05 à 5 % en poids, par rapport au pigment et de l'argent et, si on le désire, un ou plusieurs métaux modifiant la tonalité de couleur de la série Cu, Ca, Ni, Sn RU, Rh, Pd, Os, In, Pt en une quantité totale y compris la quantité d'argent inférieure à celle de l'or, tandis que dans une suspension aqueuse contenant les frittes de verre les métaux à déposer sont créés à partir de composés solubles dans l'eau.

6. Procédé selon la revendication 5,
caractérisé en ce qu'on réalise le dépôt d'or et d'argent en utilisant le même agent réducteur en même temps ou l'un derrière l'autre.

7. Utilisation des pigments pourpres selon une des revendications 1 à 4 pour la pigmentation de glaçures, d'émaux, de couleurs de verre, de couleurs de décoration, de matières plastiques, d'encres d'imprimerie et de laques.
